Europäisches Patentamt

European Patent Office

Office européen des brevets

(19)

(11) Veröffentlichungsnummer: **0 087 029**

**A1**

(12) # EUROPÄISCHE PATENTANMELDUNG

(21) Anmeldenummer: **83101068.1**

(22) Anmeldetag: **04.02.83**

(51) Int. Cl.³: **A 61 C 9/00**
**A 61 C 5/06**

(30) Priorität: 05.02.82 DE 3204043
08.09.82 DE 3233366
08.10.82 DE 3237353
03.02.83 DE 3303667

(43) Veröffentlichungstag der Anmeldung:
31.08.83 Patentblatt 83/35

(84) Benannte Vertragsstaaten:
AT BE CH DE FR GB IT LI LU NL SE

(71) Anmelder: **Schneider, Hans Klaus**

**D-8091 Ebrach 209(DE)**

(72) Erfinder: **Schneider, Hans Klaus**

**D-8091 Ebrach 209(DE)**

(74) Vertreter: **Weickmann, Heinrich, Dipl.-Ing. et al,**
**Patentanwälte Dipl.-Ing. H.Weickmann Dipl.-Phys.Dr. K.**
**Fincke Dipl.-Ing. F.A. Weickmann Dipl.-Chem. B. Huber**
**Dr.-Ing. H. Liska Dipl.-Phys.Dr. J. Prechtel Möhlstrasse**
**22**
**D-8000 München 86(DE)**

(54) Vorrichtung zum Mischen von Dentalmassen.

(57) Zum Mischen der Komponenten einer Dentalmasse, insbesondere einer Dental-Abdruckmasse, ist ein betriebsmäßig auswechselbares Rührwerk (307) mit einem Basiskörper (309) vorgesehen, welcher eine Mischkammer (311), mehrere voneinander gesondert in die Mischkammer mündende Zuführkanäle (335, 337), sowie eine Auslaßöffnung (351) für die gemischte Dentalmasse aufweist. In der Mischkammer (311) ist ein Rührer (313) drehbar angeordnet. Das Rührwerk (307) ist als Wegwerfteil ausgebildet. Die Zuführkanäle (335, 337) können mittels eines den Basiskörper (309) umschließenden Verschlußkörpers bei Entnahme des Rührwerks (307) abgesperrt werden. Als Vorratsbehälter für die Komponenten der Dentalmasse können flexible, langgestreckte und an einem Ende mit der Mischkammer (311) verbundene Tuben (323, 325) vorgesehen sein, die frei abstehend mit ihrem Anschlußende an der Vorrichtung befestigt sind.

Längs jeder Tube (323, 325) oder längs einer Gruppe von parallel nebeneinander angeordneten Tuben ist ein Schlitten (327, 329) frei verschiebbar geführt, an dem zwei zueinander achsparallele Walzen drehbar gelagert sind, welche die Tube (323, 325) zwischen sich aufnehmen und bei Bewegung des Schlittens (327, 329) zu deren Anschlußende hin ausdrücken. Eine der Walzen (367) jedes Schlittens wird von einem Motor (373) rotierend angetrieben und greift formschlüssig oder kraftschlüssig an der zwischen die Walzen (367, 365) eingreifende Tube (323, 325) an. Die Walzen (367, 377) sind vorzugsweise als miteinander kämmende Zahnwalzen ausgebildet. Eine der Walzen (377) ist radial zu ihrer Achse verschiebbar an dem Schlitten geführt, um den Schlitten von der Tube abkuppeln zu können.

./...

Croydon Printing Company Ltd.

FIG. 6

- 1 -

## Vorrichtung zum Mischen von Dentalmassen

Die Erfindung betrifft eine Vorrichtung zum Mischen der Komponenten einer Dentalmasse, insbesondere einer Dental-Abdruckmasse.

Beispielsweise in der zahnärztlichen Prothetik eingesetzte Abdruckmassen werden unmittelbar vor der Anfertigung des Zahnabdrucks aus zwei Komponenten in einem vorgegebenen Mischungsverhältnis vermischt und dann in den in den Mund des Patienten einzuführenden Abdrucklöffel gefüllt. Die Abbindezeit der Abdruckmasse beträgt nur einige Sekunden, beispielsweise 30 Sekunden, innerhalb der die Komponenten gleichmäßig vermischt werden müssen und der mit der gemischten Abdruckmasse gefüllte Abdrucklöffel eingeführt werden muß. Werden, um Zeit zu sparen, die Komponenten nur ungenügend vermischt, so bindet die Abdruckmasse nur unzureichend ab. Wird der Mischvorgang zu lang ausgedehnt, so setzt der Abbindevorgang bereits ein, bevor der Abdruck gefertigt wurde. In beiden Fällen ergeben sich keine Abdrücke mit scharfen Konturen. Der Abdruck muß wiederholt werden, was angesichts der hohen Kosten der Abdruckmasse unerwünscht ist.

Eine erste Aufgabe der Erfindung ist es, eine Vorrichtung anzugeben, mit deren Hilfe selbstabbindende Dentalmassen, insbesondere Dental-Abdruckmassen, innerhalb kurzer Zeit hinreichend vermischt werden können.

Diese Aufgabe wird erfindungsgemäß durch die kennzeichnenden Merkmale des Patentanspruchs 1 gelöst. Die Vorrichtung umfaßt eine Antriebsvorrichtung für den Rührer eines betriebsmäßig abnehmbaren Rührwerks, welches vorzugsweise einschließlich des Rührers als Wegwerfteil ausgebildet ist. Die Komponenten der Dentalmasse werden über getrennte Zuführkanäle in eine Mischkammer, in der der Rührer beweglich angeordnet ist, eingebracht. Das Rührwerk umfaßt sämtliche Bestandteile, die mit der fertig gemischten und damit selbstabbindenden Dentalmasse in Berührung kommen und kann nach einmaligem Gebrauch ausgewechselt werden. Die aus der Mischkammer austretende Dentalmasse kann unmittelbar in das zahnärztliche Instrument, beispielsweise den Abdrucklöffel eingefüllt werden.

Der Basiskörper des Rührwerks sowie der Rührer ist insbesondere als Kunststoff-Spritzgußteil ausgebildet und kann relativ kleine Abmessungen, beispielsweise in der Größenordnung einiger cm haben.

Der Rotationsrührer ist bevorzugt als Rührwendel, Rühschnecke, Rührstab oder als Flügelstern ausgebildet und wird insbesondere über eine formschlüssige, axial steckbare Kupplung mit einer rotierend angetriebenen Zapfwelle der Antriebsvorrichtung drehfest gekuppelt. Schrägflächen des Rotationsrührers sorgen für Axialströmungen an der zu mischenden Dentalmasse. Zur Befestigung des Basiskörpers an der Antriebsvorrichtung können Überwurfmuttern, Bajonettverschlüsse oder Klappriegel und dergleichen vorgesehen sein.

Vorratsbehälter für die Komponenten der Dentalmasse sind bevorzugt ebenfalls an der Antriebsvorrichtung angebracht. Die mischkammerfernen Mündungen der Zuführungskanäle bilden zweckmäßigerweise Kupplungsorgane, denen komplementäre Kupplungsorgane an der Antriebsvorrichtung zugeordnet sind. Beim Anbringen des Rührwerks an der Antriebsvorrichtung werden so zugleich die Vorratsbehälter mit der Mischkammer verbunden.

Die Kupplungsorgane können an in Richtung der Rührerdrehachse sich gegenüberliegenden Seiten des Basiskörpers und der Antriebsvorrichtung vorgesehen sein, wobei in diesem Fall die Zuführkanäle axial verlaufen. Die Zuführkanäle des Basiskörpers lassen sich einfacher herstellen, wenn sie radial oder schräg zur Rührerdrehachse verlaufen. Um den Basiskörper leichter in die Antriebsvorrichtung einsetzen zu können, sind die Kupplungsorgane des Basiskörpers, vorzugsweise jedoch die Kupplungsorgane der Antriebsvorrichtung radial zur Drehachse verschiebbar geführt und von einer Spanneinrichtung radial gegen das zugeordnete, komplementäre Kupplungsorgan andrückbar.

Bei einem zumindest über einen begrenzten Drehwinkel drehbar an der Antriebsvorrichtung gehaltenen Basiskörper können an dessen Außenseite radial abstehende Nocken vorgesehen sein, in welchen die Zuführkanäle des Basiskörpers münden. Die antriebsvorrichtungsseitigen Kupplungsorgane können als radial verschiebbare Mundstücke ausgebildet sein, die von Federn gegen antriebsvorrichtungsseitige Anschläge vorgespannt werden. Der Basiskörper kann mit aus der Flucht der Mundstücke herausgedrehten Nocken in die Antriebsvorrichtung eingesetzt werden, ohne daß die Mundstücke gegen die Kraft ihrer Federn verschoben werden müßten. Durch Drehen zu den Mundstücken hin ausgerichtet, erhöhen die Nocken den Schließdruck der Mundstücke. Anstelle der Federn, gegebenenfalls auch zusätzlich können Stellantriebe, beispielsweise Pneumatikzylinder oder dergleichen, vorgesehen sein, die die Mundstücke gegen die Kanalmündungen des Basiskörpers drücken.

Die Abdichtung der Mischkammer gegenüber den Vorratsbehältern ist von besonderer Bedeutung, da verhindert werden muß, daß bei Nichtgebrauch der Vorrichung Restmengen unbeabsichtigt in die Mischkammer einfließen können, wo sie bei Wiederingebrauchnahme der Mischvorrichtung zu Betriebsstörungen führen könnten.

Es ist eine weitere Aufgabe der Erfindung, einen konstruktiv einfachen Weg zu zeigen, wie das Einfließen der Komponenten in den Betriebspausen der Mischvorrichtung verhindert werden kann.

Diese Aufgabe wird erfindungsgemäß durch folgende Merkmale gelöst:

Durch ein Tragteil mit einer Aufnahmeöffnung, in die der Basiskörper des Rührwerks einsteckbar ist und mit Zuführkanälen für die Komponenten der Dentalmasse, die bei in seiner Betriebsstellung sich befindendem Basiskörper den Zuführkanälen des Basiskörpers benachbart münden und durch einen beweglich an dem Tragteil geführten Verschlußkörper zum Verschließen der basiskörperseitigen Mündungen der Zuführkanäle des Tragteils. Der Verschlußkörper läßt sich vor die Mündungen der Zuführkanäle des Tragteils bewegen und verschließt diese zur Aufnahmeöffnung des Basiskörpers hin, so daß der Basiskörper entnommen werden kann, ohne daß Restmengen der Komponenten in die Aufnahmeöffnung gelangen können.

Bei dem Verschlußkörper kann es sich um einen Schieber oder dergleichen handeln. In einer bevorzugten Ausführungsform ist er als in der Aufnahmeöffnung um ihre Längsachse drehbare Hülse ausgebildet, in die der Basiskörper einsteckbar ist. Die Zuführkanäle des Basisteils und des Tragteils sind hierbei in der Betriebsstellung des Basiskörpers über Durchtrittsöffnungen im Umfangsmantel der Hülse miteinander verbunden. Durch Verdrehen der Hülse relativ zum Tragteil werden die Mündungen der tragteilseitigen Zuführkanäle verschlossen.

Die Hülse kann mit einem gesonderten Handhabungsteil versehen sein. Zweckmäßigerweise sind jedoch die Hülse und
der Basiskörper durch eine in Einsteckrichtung des Basisteils formschlüssig zum Eingriff bringbare Kupplungsvorrichtung drehfest miteinander kuppelbar. Der an dem Basisteil des Rührwerks ohnehin vorgesehene Handhabungsteil oder
-griff läßt sich auf diese Weise doppelt ausnutzen.

Die Handhabung eines derart mit der Hülse kuppelbaren Rührwerks läßt sich noch weiter vereinfachen, wenn dessen Basisteil mittels einer durch Drehen um die Längsachse der
Hülse verriegelbaren Bajonettverriegelung am Tragteil verriegelbar ist. Die Hinterschneidungen der Bajonettverriegelung sind so angeordnet, daß der Basiskörper nur bei verschlossenen Zuführkanälen aus der Hülse gezogen werden
kann und andererseits die Zuführkanäle durch Drehen des
Basisteils in die Verriegelungsstellung geöffnet werden.

Insbesondere in Verbindung mit einer Bajonettverriegelung
sind axial federnde Zapfwellen für den formschlüssigen
Kupplungseingriff in den Rührer des Rührwerks von Vorteil.
Die Feder der Zapfwelle wird beim Einstecken des Rührwerks
gespannt und preßt den Kupplungskopf des Rührers dicht
gegen seine axiale Sitzfläche an dem Basisteil.

In einer bevorzugten Ausführungsform sind die Vorratsbehälter als Vorratszylinder ausgebildet, in denen jeweils ein
Kolben abgedichtet verschiebbar angeordnet ist. Derartige
Vorratszylinder lassen sich ebenfalls als Wegwerfteil ausbilden, so daß die Komponenten der Dentalmasse bereits für
die Mischvorrichtung passend konfektioniert gehandelt bzw.
vertrieben werden können.

Eine wesentliche Verbesserung der Handhabung ergibt sich, wenn die Kolben von einem gemeinsamen Stellantrieb oder mehreren gesonderten Antrieben angetrieben werden, wobei eine die Stellantriebe steuernde Steuerung die Verschiebegeschwindigkeit der Kolben einstellbar bestimmt. Auf diese Weise kann das Mischungsverhältnis der Komponenten, welches die Abbindezeit der Dentalmasse bestimmt, variiert werden. Darüber hinaus werden die Komponenten der Dentalmasse der Mischkammer kontinuierlich zugeführt und kontinuierlich in dieser gemischt, so daß das Volumen der Mischkammer kleiner bemessen sein kann als das beispielsweise für den Abdruck benötigte Volumen an Dentalmasse. Die Stellantriebe sorgen für den zum Einbringen der Komponenten in die Mischkammer und zum Ausdrücken der gemischten Dentalmasse aus der Mischkammer erforderlichen Preßdruck, so daß auch Rührer ohne Fördereigenschaften eingesetzt werden können. Mittels der Steuerung läßt sich bevorzugt nicht nur die absolute Verschiebegeschwindigkeit sondern auch die Verschiebedauer oder der Verschiebeweg der Kolben variieren, oder bei mehreren Antrieben auch das Verhältnis der Verschiebegeschwindigkeiten. Damit kann auch das Gesamtgewicht der fertig gemischten Dentalmasse variiert werden. Hierzu können ggf. an der Steuerung einstellbare Zeitglieder vorgesehen sein, die die Einschaltdauer der Stellantriebe festlegen oder durch optische oder akustische Signale auf den Ablauf vorbestimmter Förderzeiten, Mischzeiten oder Abbindezeiten hinweisen.

Die Kolben sämtlicher Vorratszylinder können mittels eines gemeinsamen Stellantriebs mit gleicher, jedoch vorzugsweise einstellbarer Verschiebegeschwindigkeit angetrieben werden, wenn das Verhältnis der Querschnittsflächen der Vorratszylinder gleich dem Mischungsverhältnis der Komponenten der Dentalmasse bemessen ist. Auf diese Weise läßt sich der konstruktive Aufwand gering halten.

Um das Einsetzen der Vorratszylinder zu erleichtern, sind in dem Tragteil Aufnahmeöffnungen vorgesehen, in die die kolbenstangenfernen Enden der Vorratszylinder oder an deren Enden vorgesehene Ansätze abgedichtet einsteckbar sind. Die Zuführkanäle des Tragteils münden in quer zur Einsteckrichtung verlaufenden Mantelflächen der Aufnahmeöffnungen.

Dementsprechend sind in den in die Aufnahmeöffnungen einsteckbaren Bereichen der Vorratszylinder quer zur Einsteckrichtung gerichtete Austrittsöffnungen vorgesehen. Die Vorratszylinder sind vorzugsweise etwa horizontal einsteckbar und in den Aufnahmeöffnungen drehbar. Sie können damit mit nach oben gerichteten Austrittsöffnungen eingeführt werden, ohne daß Dentalmasse austreten kann. Zur Verriegelung der Vorratszylinder in den Aufnahmeöffnungen sind zweckmäßigerweise wiederum Bajonettverriegelungen vorgesehen.

Der vorstehend erläuterte Verschlußkörper läßt sich ohne weiteres als Verschlußkörper eines Umschaltventils ausbilden. Auf diese Weise lassen sich soweit an dem Tragteil die erforderliche Anzahl Vorratszylinder vorgesehen ist mit dem Rührwerk durch bloßes Umschalten des Verschlußkörpers unterschiedliche Dentalmassen oder unterschiedliche Mischungsverhältnisse einstellen. Zum Mischen unterschiedlicher Dentalmassen können an dem Tragteil die Vorratszylinder für Komponentengruppen vorgesehen sein. Soweit unterschiedliche Mischungsverhältnisse eingestellt werden sollen, können an dem Tragteil für wenigstens eine der Komponenten mehrere Vorratszylinder vorgesehen sein, die in wählbarer Anzahl mit der Mischkammer verbunden werden.

Bei der vorstehend erläuterten Ausführungsform der Mischvorrichtung sind als Vorratsbehälter für die Komponenten der Dentalmasse Vorratszylinder mit darin verschiebbar angeordneten Kolben vorgesehen. Solche Vorratsbehälter sind vielfach aufwendig, so daß sie sich nur begrenzt als Handelsverpackung für die Komponenten der Dentalmasse eignen.

Es ist eine weitere Aufgabe der Erfindung, einen Weg für die Vereinfachung der Vorratsbehälter, insbesondere im Hinblick auf ihre Eignung als Handelsverpackung zu zeigen und die eingangs erläuterte Vorrichtung auf konstruktiv einfache Weise so zu verbessern, daß die Komponenten der Dentalmasse betriebssicher und in vorgegebenem Mischungsverhältnis dem Rührwerk zugeführt werden können.

Diese Aufgabe wird erfindungsgemäß dadurch gelöst, daß als Vorratsbehälter für die Komponenten der Dentalmasse flexible, langgestreckte und an einem Ende an den Zuführkanal anschließbare Tuben vorgesehen sind, die frei abstehend mit ihrem Anschlußende an der Vorrichtung befestigbar sind, daß längs jeder Tube oder längs einer Gruppe von parallelen, nebeneinander angeordneten Tuben ein Schlitten frei verschiebbar geführt ist, an dem zwei zueinander achsparallele Walzen drehbar gelagert sind, welche die Tube bzw. Tuben zwischen sich aufnehmen und bei Bewegung des Schlittens zu deren Anschlußende hin, ausdrücken und daß eine der Walzen jedes Schlittens von einem Motor rotierend antreibbar ist und formschlüssig oder kraftschlüssig an der bzw. den zwischen die Walzen eingreifenden Tube bzw. Tuben angreift. Diese Konstruktion kann auch bei anderen Mischvorrichtungen eingesetzt werden.

Die Tuben werden beispielsweise mittels ihrer stirnseitigen Gewindenippel in entsprechende endseitige Gewindeaufnahmen der Zuführkanäle eingeschraubt. Das üblicherweise bereits abgeflachte nippelferne Ende der Tube wird zwischen die Walzen des frei verschiebbaren Schlittens eingeführt. Die Walzen klemmen je nach Gestaltung ihrer Oberfläche die Tube kraftschlüssig oder formschlüssig zwischen sich ein. Beim Einschalten des Motors zieht die angetriebene Walze den Schlitten zum Abschlußende der Tube hin, wobei diese von den Walzen ausgedrückt wird.

Soweit die Querschnittsflächen der Tuben entsprechend dem gewünschten Mischungsverhältnis der Komponenten bemessen sind, können die Tuben parallel nebeneinander angeordnet werden, so daß sie gemeinsam von einem einzigen Walzenpaar ausgedrückt werden. Eine solche Ausgestaltung hat den Vorteil, daß sie relativ wenig Platz beansprucht. Vorteilhafterweise sind zwei wechselweise einschaltbare Tubengruppen vorgesehen, von denen jede Gruppe sämtliche Komponenten der Dentalmasse umfaßt. Sind die Tuben der einen Tubengruppe leer, so kann unmittelbar im Anschluß daran das Rührwerk mit der Dentalmasse der anderen Tubengruppe beschickt werden. Alternativ kann jedoch auch für jede Tube ein gesonderter Schlitten vorgesehen sein. Dies hat den Vorteil, daß die Vorschubgeschwindigkeiten der Schlitten unabhängig voneinander variiert werden können, so daß das Mischungsverhältnis der Dentalmasse eingestellt werden kann. Auch bei dieser Ausführungsform können selbstverständlich zwei Gruppen von Tuben vorgesehen sein, die jeweils sämtliche Komponenten der Dentalmasse umfassen, um eine kontinuierliche Abgabe der Dentalmasse sicherzustellen.

Die Mantelfläche der vom Motor angetriebenen Walze ist zweckmäßigerweise mit einem Gummimantel versehen oder geriffelt oder in sonstiger Weise schlupfhindernd gestaltet. In einer bevorzugten Ausführungsform sind die Walzen als miteinander kämmende Zahnwalzen ausgebildet. Solche Walzen prägen den ausgequetschten Tubenkörper wellenförmig und sorgen für eine sichere, schlupffreie Antriebsverbindung.

In einer bevorzugten Ausführungsform ist eine der Walzen zwischen einer die Tube bzw. Tuben in Anlagekontakt zur anderen Walze haltenden Position und einer die Tube bzw. Tuben für eine freie Verschiebung des Schlittens freigebenden Position radial verschiebbar geführt. Auf diese Weise erübrigt sich ein drehrichtungsumkehrbarer Motor. Darüber hinaus kann die Antriebsverbindung zwischen Walzen und Tube gelöst werden, so daß der Schlitten von Hand, beispielsweise für die Entnahme der Tube in seine tubenferne Position zurückgeschoben werden kann.

Zweckmäßigerweise ist die radial verschiebbare Walze an einem Arm drehbar gelagert, der seinerseits um eine zur Walzenachse parallele Achse schwenkbar an dem Schlitten gelagert ist. Ein die Anlagekontaktposition des Arms bestimmender Anschlag des Schlittens begrenzt hierbei die vom Anschlußende der Tube in Verschieberichtung des Schlittens wegführende Bewegung der am Arm gelagerten Walze. Beim Ausquetschen der Tube bewegt sich der Arm selbsttätig bis an den Anschlag heran. Für die entgegengesetzte Verschieberichtung des Schlittens, läßt sich das Walzenpaar problemlos von der Tube abkoppeln.

Im folgenden sollen Ausführungsbeispiele der Erfindung anhand von Zeichnungen näher erläutert werden. Es zeigt

Fig. 1    eine schematische Schnittansicht einer Mischvorrichtung für Dental-Abdruckmassen;

Fig. 2    eine zweite Ausführungsform eines in der Mischvorrichtung nach Fig. 1 verwendbaren Rührsterns;

Fig. 3    eine schematische Schnittansicht einer dritten Ausführungsform einer Mischvorrichtung für Dental-Abdruckmassen;

Fig. 4    eine Schnittansicht des Rührwerks der Mischvorrichtung gemäß Fig. 3 entlang einer Linie IV-IV;

Fig. 5    eine schematische Schnittansicht einer vierten Ausführungsform einer Mischvorrichtung für Dental-Abdruckmassen;

Fig. 6    eine teilweise geschnittene, schematische Ansicht einer fünften Ausführungsform einer Mischvorrichtung für Dental-Abdruckmassen und

Fig. 7  eine teilweise geschnittene Seitenansicht eines
        Schlittens der Vorrichtung nach Fig. 6, gesehen
        entlang einer Linie VII-VII.

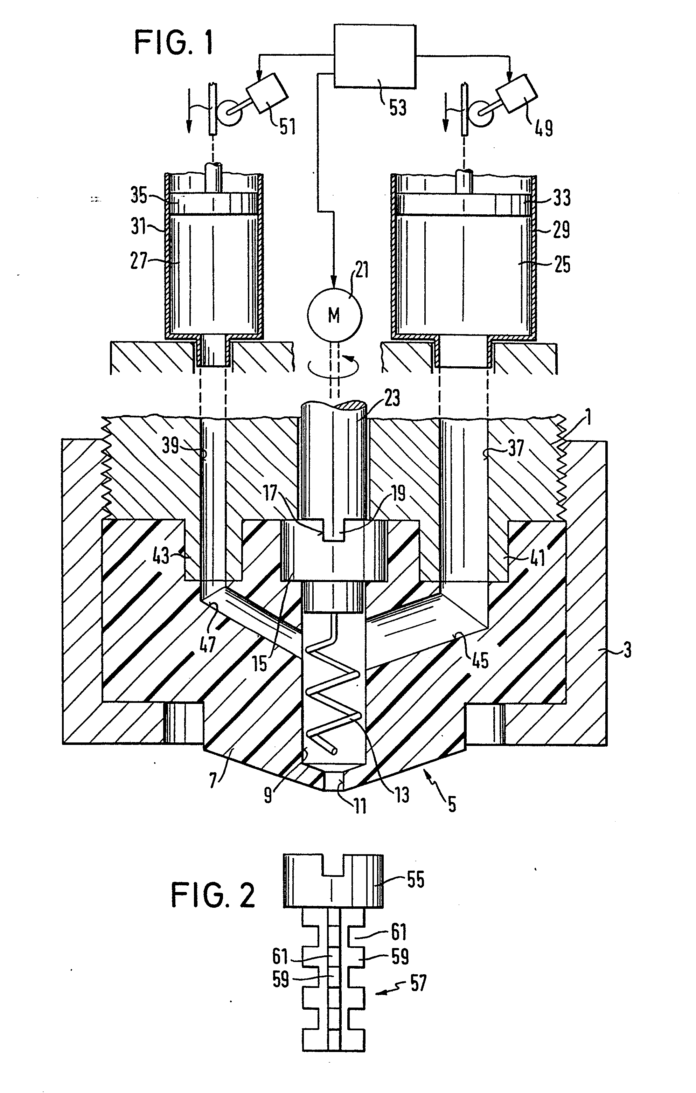

An einer Kupplungsplattform 1 der Mischvorrichtung in Fig. 1 ist mittels einer Überwurfmutter 3 ein Rührwerk 5 abnehmbar angebracht. Das Rührwerk 5 besteht im wesentlichen aus einem Basiskörper 7 mit einer im wesentlichen hohlzylindrischen Mischkammer 9, die sich auf ihrer der Kupplungsplattform 1 axial abgewandten Seite zu einer Auslaßöffnung 11 verjüngt. In der Mischkammer 9 ist ein Rührwendel 13 drehbar, jedoch axial fest gelagert. Der Rührwendel 13 trägt einen, das Lager bildenden Kupplungskopf 15 mit einem radial verlaufenden Kupplungsschlitz 17 auf der zur Kupplungsplattform 1 weisenden Stirnseite. In den Kupplungsschlitz greift formschlüssig eine komplementäre Kupplungsrippe 19 an der Stirnseite einer von einem Elektromotor 21 angetriebenen Zapfwelle 23. Bei auf die Kupplungsplattform 1 aufgesetztem Rührwerk 5 treibt der Motor 21 den Rührwendel 13 an.

Die zu mischenden Komponenten der Abdruckmasse sind in Druckräumen 25 bzw. 27 zweier Vorratszylinder 29 bzw. 31 enthalten, in denen abgedichtet Kolben 33 bzw. 35 verschiebbar angeordnet sind. Der Vorratszylinder 29 hat einen grösseren Durchmesser als der Vorratszylinder 31 und enthält die Grundkomponente der Abdruckmasse. Die zum Selbstabbinden der Abdruckmasse benötigte Katalysatorkomponente ist im kleineren Vorratszylinder 31 enthalten. Verbindungskanäle 37 bzw. 39 führen von der kolbenfernen Stirnseite der Vorratszylinder 29, 31 zu je einem Kupplungsorgan 41 bzw. 43 an der in Achsrichtung der Zapfwelle 23 zum Basiskörper 7 weisenden Fläche der Kupplungsplattform 1. Im dargestellten Ausführungsbeispiel sind die Kupplungsorgane 41, 43 als Rohransätze ausgebildet, die in komplementäre Kupplungstaschen des Basiskörpers abgedichtet eingreifen. Die Verbindungskanäle 37, 39 setzen sich innerhalb des Basiskörpers 7 in Form von Zuführungskanälen 45 bzw. 47 fort, die auf diametral gegenüberliegenden Seiten der Mischkammer in diese münden. Die Mündungen sind von der Austrittsöffnung 11 möglichst weit entfernt. Die Verbindungskanäle 37, 39 bzw. die Zuführungskanäle 45, 47 haben ebenfalls unterschiedlichen Durchmesser, wobei auch hier der Durchmesser der Kanäle für die Grundkomponente größer ist als der Durchmesser der Kanäle für die Katalysatorkomponente. Die Durchmesser der Zylinder bzw. Kanäle können aber auch jeweils gleich sein.

Beim Mischen der Abdruckmasse werden die Kolben 33, 35 in die Vorratszylinder 29, 31 eingeschoben, wobei das Einschieben schrittweise oder kontinuierlich erfolgen kann. Die Komponenten treten über die Zuführungskanäle 45, 47 auf der auslaßfernen Seite bei rotierendem Rührwendel 13 ein und werden unter dem Druck der nachgeschobenen Komponenten gemischt über die Auslaßöffnung 11 ausgeschoben. Die Auslaßöffnung 11 ist vorzugsweise nach unten gerichtet, so daß die gemischte Abdruckmasse unmittelbar in den Abdrucklöffel eingefüllt werden kann.

Das aus Basiskörper 7 und Rührwendel 13 bestehende Rührwerk 5 ist als Wegwerfteil ausgebildet und enthält sämtliche Elemente der Mischvorrichtung, die mit zum Abbinden fertig gemischter Abdruckmasse in Berührung kommt. Das Rührwerk 5 wird nach einmaligem Gebrauch ausgewechselt.

Die Abbindezeit der Abdruckmasse hängt vom Mischungsverhältnis der Grundkomponente und der Katalysatorkomponente ab. Um das Mischungsverhältnis reproduzierbar einstellen zu können, wird jeder der Kolben 33 bzw. 35 von einem gesonderten Stellantrieb, hier einem elektrischen Stellantrieb 49 bzw. 51 bewegt. Die Vorschubgeschwindigkeit der Stellantriebe 49, 51 wird von einer elektrischen Steuerung 53 gesteuert, an der das Verhältnis der Mischungsgeschwindigkeiten zur Einstellung der Abbindezeit und der maximale Vorschubweg bzw. die maximale Vorschubzeit einstellbar ist, um auch die gewünschte Menge fertig gemischter Abdruckmasse vorgeben zu können. Die Steuerung 53 steuert darüber hinaus den Betrieb des Motors 21. Nach dem Starten der Mischvorrichtung, beispielsweise mittels einer Starttaste, liefert die Mischvorrichtung eine vorgebbare Menge fertig gemischter Abdruckmasse mit vorgebbarem Mischungsverhältnis der Grundkomponente zur Katalysatorkomponente, was die Handhabung der Mischvorrichtung sehr erleichtert.

Die Vorratszylinder 29, 31 einschließlich der darin verschiebbaren Kolben 33, 35 sind ebenfalls als Wegwerfteil ausgebildet, so daß als Handelsverpackung dienende Vorratszylinder benutzt werden können. Anstelle der elektrischen Stellantriebe 49, 51 können auch andere, beispielsweise pneumatische oder hydraulische Stellantriebe vorgesehen sein.

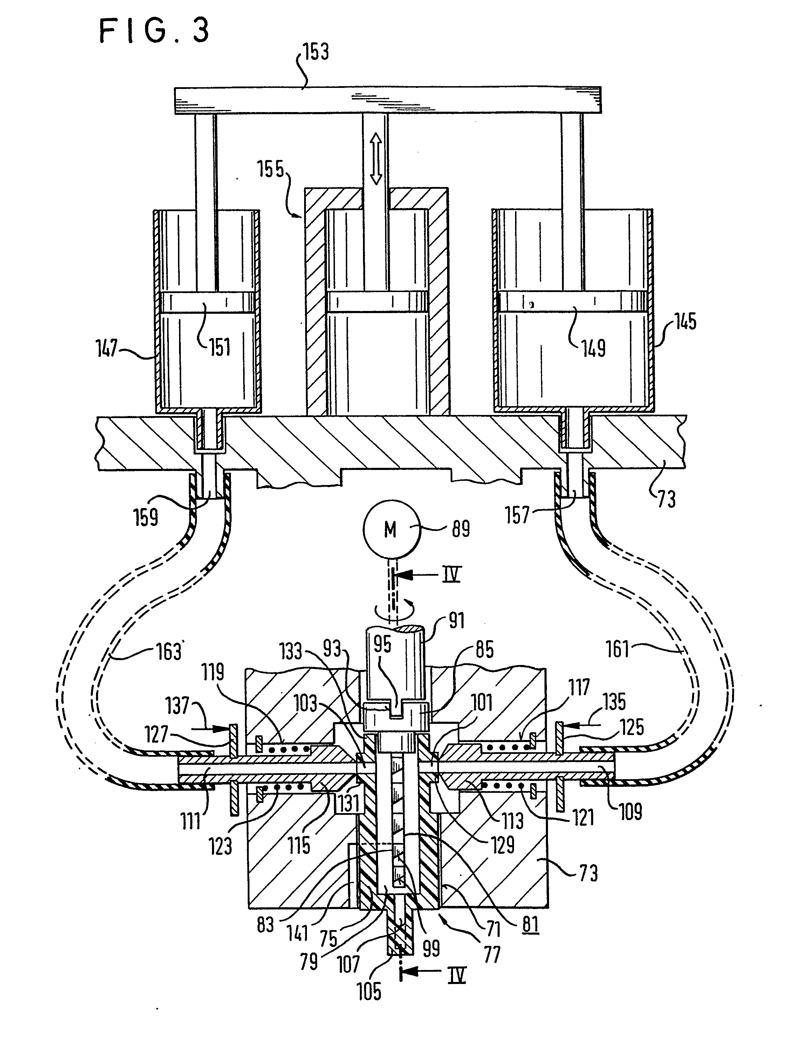

Anstelle der Rührwendel 13 können auch andere Rührer benutzt werden. Fig. 2 zeigt einen Rührer, von dessen Kupplungskopf 55 ein Flügelstern 57 absteht. Der Flügelstern 57 hat mehrere, im Ausführungsbeispiel der Fig. 2 vier gezahnte Flügel 59, die radial zur Drehachse abstehen und zur Bildung der Zähne in Achsrichtung mit Abstand aufeinanderfolgende Lücken 61 aufweisen. Die Zähne verbessern die Mischeigenschaften des Flügelsterns. Die Lücken 61 benachbarter Flügel 59 sind in Achsrichtung ebenfalls versetzt, was die Mischwirkung weiter steigert. Die Zähne reichen nahezu an die Innenwand der Mischkammer heran, so daß der gesamte Inhalt der Mischkammer gerührt wird. Weitere Ausführungsformen von Rührern sind denkbar, insbesondere Rührschnecken.

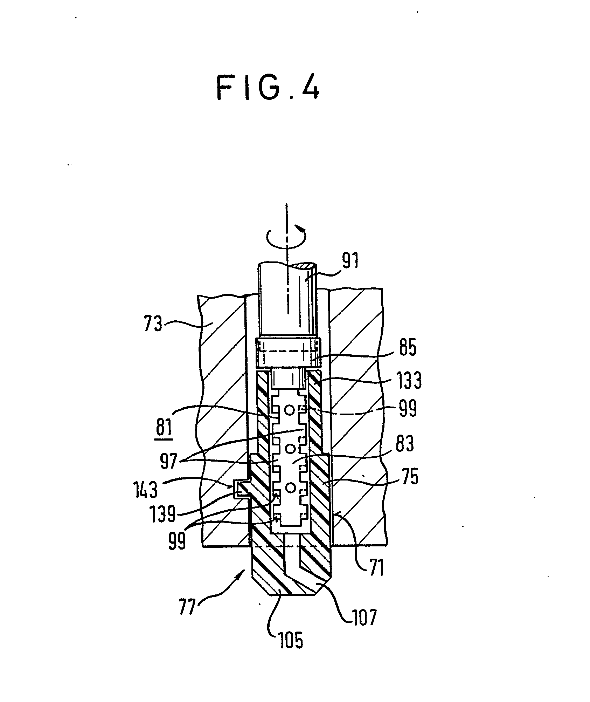

Die Fig. 3 und 4 zeigen eine andere Ausführungsform einer Mischvorrichtung für Dental-Abdruckmassen. In einer zylindrischen Führungsöffnung 71 eines Geräterahmens 73 ist von einer Bedienungsseite her ein im wesentlichen zylindrischer Basiskörper 75 eines allgemein mit 77 bezeichneten Rührwerks einsteckbar. Der Basiskörper 75 enthält eine zylindrische Mischkammer 79, in die ein Rotationsrührer 81 gleichachsig drehbar eingreift. Der Rotationsrührer 81 umfaßt einen flachen, langgestreckten Rührstab 83, der an seinem antriebsseitigen Ende einen an dem Basiskörper 75 geführten Kopf 85 trägt. Bei betriebsmäßig eingesetztem Rührwerk 77 greift eine von einem Motor 89 angetriebene Zapfwelle 91 formschlüssig in einen Schlitz 93 des Kopfs 85. Der Schlitz 93 bildet zusammen mit einer komplementären Rippe 95 der Zapfwelle 91 eine axial lösbare Kupplung, die das Entnehmen des Rührwerks 77 aus dem Geräterahmen 73 erlaubt. Der Stab 83 des Rotationsrührers 81 trägt entlang seiner Längskanten eine Vielzahl Zähne 97, deren zapfwellenabgewandte Flächen schräg zur Drehachse verlaufen und Schubflächen 99 für eine axiale Vermischung bilden.

Die Mischkammer umfaßt im Bereich des Kopfs 85 zwei diametral gegenüberliegende, radial verlaufende Zuführkanäle 101, 103, über die die beiden zu mischenden Komponenten der Dental-Abdruckmasse in nachfolgend noch näher erläuterter Weise in die Mischkammer 79 eingeführt werden. Am zapfwellenfernen Ende trägt der Basiskörper einen Handhabungsgriff 105, der über die bedienungsseitige Fläche des Geräterahmens 73 frei vorsteht. Durch den Griff 105 verläuft ein Auslaßkanal 107, der in einem ersten, an die Mischkammer 79 anschließenden Bereich gleichachsig zur Mischkammer 79 verläuft und dann zum leichteren Abfüllen der gemischten Dentalmasse in Betriebsstellung schräg nach unten gerichtet ist.

In der Betriebsstellung des Rührwerks 77 fluchten die Zuführkanäle 101, 103 mit Zuführkanälen 109, 111 in Mundstücken 113, 115, die in radialen Bohrungen 117, 119 des Geräterahmens 73 radial zur Rührerdrehachse verschiebbar sind. Schraubdruckfedern 121, 123 spannen die konisch sich verjüngenden Mündungsseiten der Mundstücke 113, 115 dicht gegen die zugewandten Mündungen der Zuführkanäle 101, 103.

Die konischen Mündungsseiten der Mundstücke 113, 115 greifen hierbei geringfügig in die Zuführkanäle 101, 103 ein. Beide Mundstücke 113, 115 sind mit Anschlägen 125 bzw. 127 versehen, die die Einwärtsbewegung der Mundstücke 113, 115 bei entnommenem Rührwerk 77 begrenzen.

Die Zuführkanäle 101, 103 münden in Nocken 129, 131, die sich über einen zapfwellenseitigen Zylinderansatz 133 des Basiskörpers 75 radial erheben. Der Durchmesser des Zylinderansatzes 133 ist so gewählt, daß er zwischen die konischen Mündungsflächen der Mundstücke 113, 115 paßt, wenn deren Anschläge 125, 127 am Geräterahmen 73 anliegen. Der Durchmesser des Kopfs 85 entspricht dem Durchmesser des Zylinderansatzes 133. Das Rührwerk 77 kann damit leicht gängig zwischen die Mundstücke 113, 115 eingesteckt werden, bis die Zuführkanäle 101, 103 und 109, 111 in einer Ebene liegen. Durch Drehen des Basiskörpers 75 werden die Zuführkanäle 101, 103 zu den Zuführkanälen 109, 111 der Mundstücke 113, 115 ausgerichtet, wobei die Nocken 129, 131 die Mundstücke 113, 115 radial nach außen drängen.

Zur Erhöhung des Anpreßdrucks der Mundstücke 113, 115 können nicht näher dargestellte Kraftantriebe vorgesehen sein, die die Mundstücke zusätzlich oder anstelle der Federn 121, 123 in Richtung von Pfeilen 135, 137 beaufschlagen. Bei den Kraftantrieben kann es sich beispielsweise um Pneumatikzylinder oder dergleichen handeln.

Für die axiale Verriegelung des Rührwerks 77 am Geräterahmen 73 trägt der Basiskörper 75 eine radial abstehende Nase 139, die bajonettverschlußartig über eine axiale Einführnut 141 der Führungsöffnung 71 in eine winkelbegrenzte Umfangsnut 143 einführbar ist.

Die beiden in einem vorbestimmten Mischungsverhältnis zu mischenden Komponenten der Dental-Abdruckmasse sind in zwei abnehmbar an dem Geräterahmen 73 gehaltenen Vorratszylindern 145, 147 enthalten, in denen Kolben 149, 151 abgedichtet verschiebbar sind. Das Verhältnis der von den Kolben abgedeckten Öffnungsquerschnitte der Vorratszylinder 145, 147 ist gleich dem vorbestimmten Mischungsverhältnis gewählt. Die Kolben sind über ein Joch 153 miteinander und mit einem gemeinsamen Stellantrieb 155 in Form eines doppelt wirkenden, pneumatischen Arbeitszylinders gekuppelt. Austrittsöffnungen 157, 159 der Vorratszylinder 145, 147 sind über flexible Schläuche 161, 163 mit den Mundstücken 113 bzw. 115 verbunden. Bei Betätigung des Stellantriebs 155 werden die Kolben 149, 151 mit gleicher Geschwindigkeit um gleiche Wegstrecken verstellt, womit die Komponenten der Dentalmasse im richtigen Mischungsverhältnis in die Mischkammer 79 hineingedrückt werden. Die Verschiebegeschwindigkeit der Kolben 149, 151 ist vorzugsweise einstellbar.

Bei dem aus dem Basiskörper 75 und dem Rotationsrührer 81 bestehenden Rührwerk 77 handelt es sich bevorzugt um ein beispielsweise aus Kunststoff gefertigtes Wegwerfteil. Die Vorratszylinder 145, 147 einschließlich der Kolben 149, 151 sind ebenfalls als Wegwerfteil ausgebildet. Sie dienen darüber hinaus als Handelsverpackung der Komponenten der Dental-Abdruckmasse.

Anstelle des in den Fig. 3 und 4 dargestellten Rotationsrührers 81 können auch andere Rührerformen benutzt werden, insbesondere die Rührer der Fig. 1 und 2. In Fig. 3 wird der kolbenstangenseitige Druckraum des Pneumatikzylinders 155 zum Entleeren der Vorratszylinder 145, 147 herangezogen. Die spiegelbildliche Einbauweise ist ebenfalls möglich, um den kolbenstangenfernen Arbeitsraum zum Entleeren ausnutzen zu können. Anstelle des Pneumatikzylinders können auch andere Stellantriebe, insbesondere elektrische Stellantriebe, eingesetzt werden.

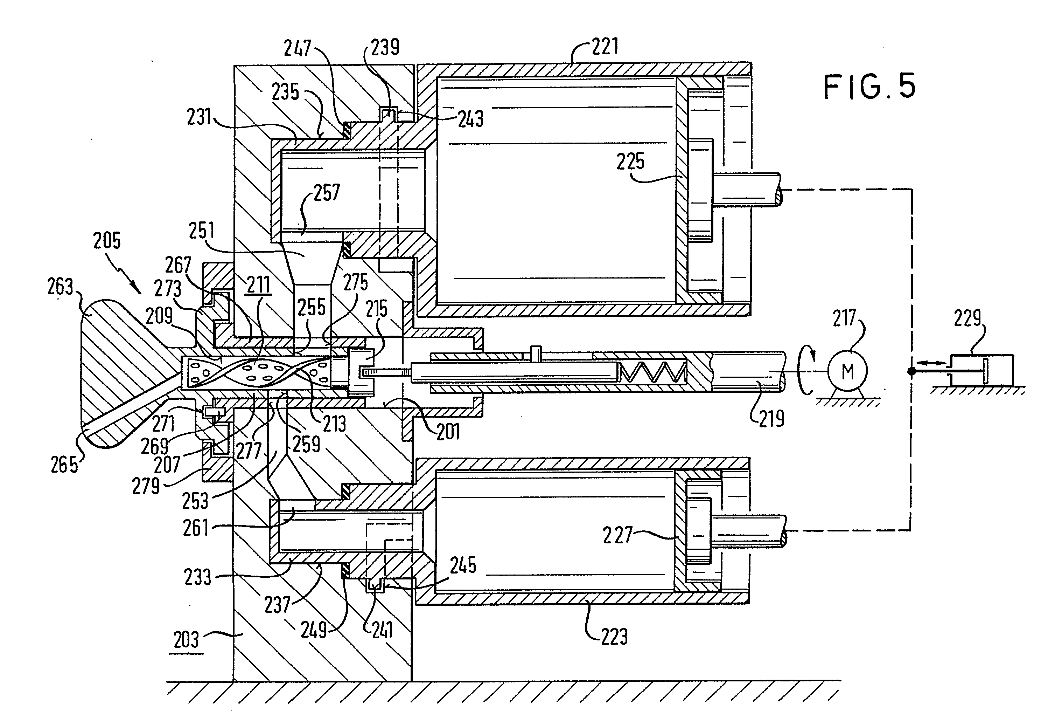

Fig. 5 zeigt eine weitere Ausführungsform einer Mischvorrichtung für Dental-Abdruckmassen.

In einer zylindrischen Aufnahmeöffnung 201 eines Tragteils 203 sitzt betriebsmäßig abnehmbar ein als Wegwerfteil ausgebildetes Rührwerk 205 mit einem zylindrischen Basiskörper 207 und einem in einer zylindrischen Mischkammer 209 des Basiskörpers 207 gleichachsig drehbar gelagerten Rührer 211. Der Rührer 211 umfaßt eine mit Löchern versehene Rührwendel 213, die an einem im Basiskörper 207 gelagerten Kopf 215 gehalten ist. Ein Motor 217 treibt über eine Zapfwelle 219 den Rührer 211 an. Die Zapfwelle 219 ist federnd teleskopierbar ausgebildet und formschlüssig steckbar mit dem Kopf 215 gekuppelt. Die Federkraft der Zapfwelle 219 drückt den Kopf 215 axial gegen die zugewandte Stirnfläche des Basiskörpers 207, wodurch der Kopf 215 gegen den Basiskörper 7 abgedichtet wird.

Die Komponenten der zu mischenden Dentalmasse sind in Vorratszylindern 221 bzw. 223 enthalten. In den Vorratszylindern 221, 223, die zugleich die Handelsverpackung der Komponenten der Dentalmasse bilden, sind Kolben 225, 227 abgedichtet angeordnet und mittels einer Antriebsvorrichtung 229 gemeinsam und um gleiche Hübe verschiebbar. Bei der Antriebsvorrichtung 229 kann es sich beispielsweise um einen in doppelter Richtung wirkenden Pneumatikzylinder oder dergleichen handeln. Das Verhältnis der Querschnittsflächen der Kolben 225 und 227 ist gleich dem gewünschten Mischungsverhältnis der Komponenten bemessen. Die Vorratszylinder 221, 223 tragen an ihren kolbenfernen Stirnseiten axiale Ansätze 231 bzw. 233, die abgedichtet in passende Aussparungen 235 bzw. 237 des Tragteils 3 einsteckbar sind. Die Ansätze 231, 233 sitzen drehbar in den Aussparungen 235 bzw. 237. Bajonettverschlüsse bestehend aus einem radialen Vorsprung 239 bzw. 241 und einer Hinterschneidung 243 bzw. 245 hinter die die Vorsprünge 239, 241 durch eine Steck- und Drehbewegung der Vorratszylinder 221, 223 bewegbar sind, halten die Vorratszylinder 221, 223 an dem Tragteil 203. 247 und 249 bezeichnen Dichtringe, die für eine axiale Vorspannung der Bajonettverschlüsse sorgen und die Aufnahmeöffnungen 235, 237 gegenüber den Ansätzen 231, 233 nach außen hin abdichten.

Der Basiskörper 207 sitzt in seiner Aufnahmeöffnung 201 zwischen den Ansätzen 231, 233. Seine Mischkammer 209 ist über in dem Tragteil 203 vorgesehene Zuführkanäle 251 bzw. 253 mit den Vorratszylindern 221, 223 verbunden. In der Betriebsstellung fluchtet der Zuführkanal 251 mit einer radialen Öffnung 255 im Umfangsmantel des Basiskörpers 207 einerseits und einer radialen Öffnung 257 im Umfangsmantel des Ansatzes 231 des Vorratszylinders 221 andererseits. Entsprechend fluchtet in der Betriebsstellung der Zuführkanal 253 mit einer radialen Öffnung 259 im Umfangsmantel des Basiskörpers 207 einerseits und einer radialen Öffnung 261 im Umfangsmantel des Ansatzes 233 des Vorratszylinders 223 andererseits. Über die Zuführkanäle 251, 253 werden die Komponenten der zu mischenden Dentalmasse bereits im richtigen Mischungsverhältnis in die Mischkammer 209 hineingedrückt, wo sie von dem sich drehenden Rührer 211 innig vermischt werden. In einem die Handhabung erleichternden Griffstück 263 am zapfwellenfernen, axial außerhalb des Tragteils 203 gelegenen Ende des Basiskörpers 207 ist ein in der Betriebsstellung von der axialen Stirnseite der Mischkammer 209 weg nach unten gerichteter Auslaßkanal 265 für die gemischte Dentalmasse vorgesehen.

Der Basiskörper 207 sitzt koaxial in einer drehbar in der Aufnahmeöffnung 201 geführten Hülse 267, in die er zusammen mit dem Rührer 211 betriebsmäßig einsteckbar ist. Ein Stift 269 an der dem Griff 263 zugewandten Stirnseite der Hülse 267 greift in eine entsprechende Öffnung 271 eines vom Basisteil 207 radial abstehenden Flanschteils 273 und bildet eine formschlüssige Steckkupplung, die das in die Hülse 267 einsteckbare Rührwerk 205 drehfest mit der Hülse 267 kuppelt. Die Hülse 267 weist Öffnungen 275 bzw. 277 auf, die bei betriebsmäßig in die Hülse 267 eingestecktem und mit dieser drehfest gekuppeltem Basiskörper 207 mit den

Öffnungen 255 bzw. 259 des Basiskörpers fluchten. Die Hülse 267 bildet einen Ventilkörper, mittels dem die rührwerkseitigen Mündungen der Zuführkanäle 251, 253 abgesperrt werden können. Der Flanschteil 273 bildet zusammen mit Hinterschneidungen 279 des Tragteils 203 eine Bajonettverriegelung, die in der verriegelten Stellung das Rührwerk 205 bei geöffneten Zuführkanälen 251, 253 am Tragteil 203 hält. Die Verriegelung wird durch Drehen des Rührwerks 205 gelöst. Bei der Drehung wird die Hülse 267 über den Stift 269 mitgedreht, wodurch die rührwerkseitigen Mündungen der Zuführkanäle 251, 253 verschlossen werden, bevor das Rührwerk 205 herausgezogen werden kann.

Dental-Abdruckmassen bestehen üblicherweise aus einer Grundsubstanz und einer mit geringerem Volumenanteil zuzusetzenden Härtersubstanz. Die Härtersubstanz hat eine größere Viskosität als die im allgemeinen noch fließfähige Grundsubstanz. Um das Ausfließen der Komponenten beim Einsetzen der Vorratszylinder 221, 223 in die Tragvorrichtung 203 zu verhindern, ist die Steckrichtung etwa horizontal gewählt. Die Vorratszylinder 221 und 223 werden mit nach oben weisender Auslaßöffnung 257 bzw. 261 in das Tragteil eingesetzt und dann soweit gedreht, daß die Auslaßöffnung mit dem zugeordneten Zuführkanal fluchtet. Die Bajonettverriegelungen der Vorratszylinder 221, 223 sind so bemessen, daß sie diese Drehung zulassen. Der Vorratszylinder 221 ist oberhalb des Rührwerks 205 angeordnet und enthält zweckmäßigerweise die fließfähigere Grundsubstanz. Der Vorratszylinder 223 enthält die zähflüssigere Härtersubstanz und ist unterhalb des Rührwerks 205 angeordnet.

Der Zuführkanal 253 für die zähere Härtersubstanz hat zumindest rührwerkseitig einen kleineren Querschnitt als der Zuführkanal 251 für die Grundsubstanz, um eine ausreichend hohe Einspritzgeschwindigkeit der Härtersubstanz beim Eintritt in die Mischkammer 209 und damit eine bessere Vermischung sicherzustellen. Zugleich wird durch die Verengung des Zuführkanals 253 das Zurückfließen der zähen Härtersubstanz beim Entnehmen des Vorratszylinders 223 verhindert. Die Öffnungen 255, 259 und damit die rührwerkseitigen Mündungen der Zuführkanäle 251, 253 sind in axialer Richtung des Basiskörpers 207 gegeneinander versetzt, um zu verhindern, daß bei geöffnetem Zuführkanal 251 eventuell abtropfende Grundsubstanz unmittelbar und ohne Betätigung des Rührwerks mit der in der Mündung des Zuführkanals 253 stehenden Härtersubstanz in Berührung kommt.

Beim Herstellen von Dentalabdrücken müssen oftmals unterschiedliche Dental-Abdruckmassen nacheinander gemischt werden. Um lediglich eine Antriebsvorrichtung, das heißt einen Motor 217 bereitstellen zu müssen, können an dem Tragteil 203 in nicht näher dargestellter Weise die Vorratszylinder für die Komponenten mehrerer Abdruckmassensysteme vorgesehen sein. Die Vorratszylinder sind wie bereits vorstehend erläutert wiederum über gesonderte Zuführkanäle mit demselben Rührwerk verbunden, wobei die das Rührwerk aufnehmende Hülse jedoch lediglich Öffnungen für die Zuführkanäle der Komponenten eines der Abdruckmassensysteme aufweist. Die Zuführkanäle der Abdruckmassensysteme sind gegeneinander winkelversetzt, so daß die Hülse ein Umschaltventil bildet, mit dem wählbar die Zuführkanäle eines der Abdruckmassensysteme freigegeben werden, während die übrigen gesperrt werden.

In ähnlicher Weise läßt sich das Mischungsverhältnis der Komponenten variieren, wenn für zumindest eine der Komponenten des Abdruckmassensystems mehrere Vorratszylinder vorgesehen sind, die mittels der als Umschaltventil dienenden Hülse in wählbarer Anzahl mit der Mischkammer des Rührwerks verbunden werden können. Um die Betätigung der gesperrten Vorratszylinder verhindern zu können, werden deren Kolben über steuerbare Antriebe, gegebenenfalls Freiläufe, angetrieben.

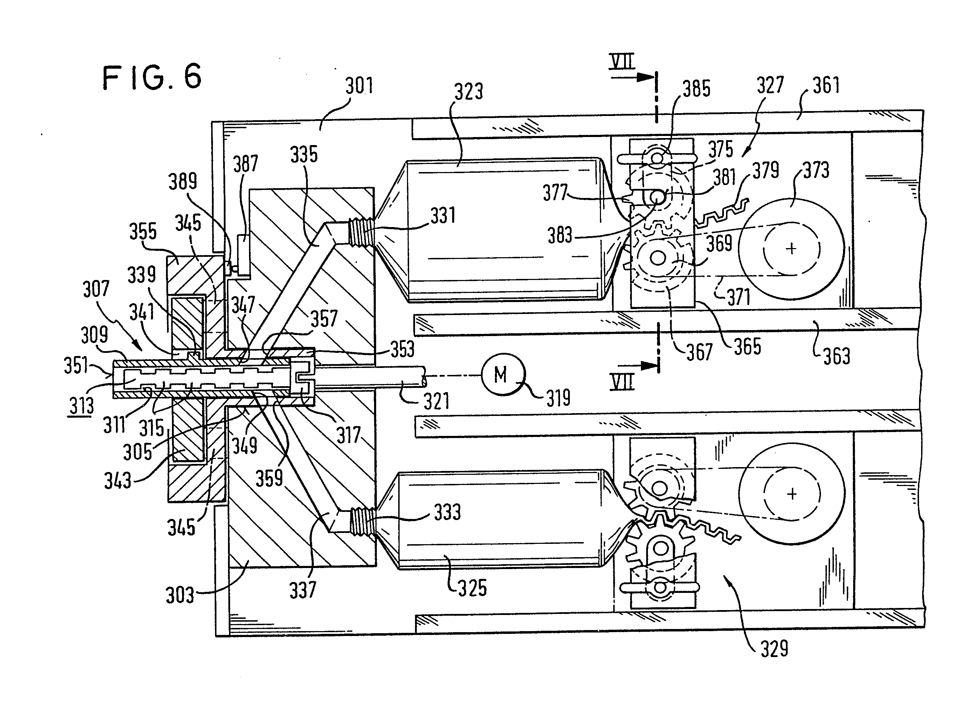

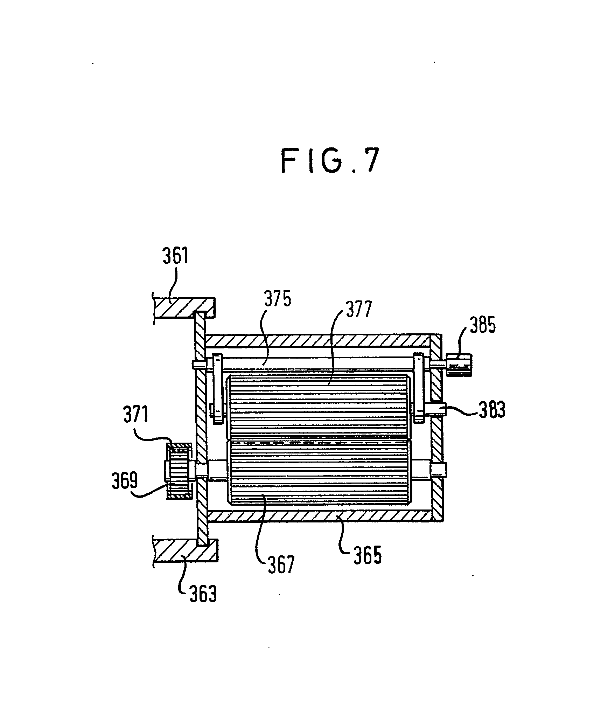

Die Fig. 6 und 7 zeigen eine weitere Ausführungsform einer Mischvorrichtung für Dental-Abdruckmassen.

Die Mischvorrichtung umfaßt einen Rahmen 301 mit einem daran befestigten Tragteil 303. In einer zylindrischen Aufnahmeöffnung 305 des Tragteils 303 sitzt betriebsmäßig abnehmbar ein als Wegwerfteil ausgebildetes Rührwerk 307 mit einem als Rohr ausgebildeten, zylindrischen Basiskörper 309 und einem in einer zylindrischen Mischkammer 311 des Basiskörpers 309 gleichachsig drehbar angeordneten Rührer 313. Der im wesentlichen als flacher Stab ausgebildete Rührer 313 ist an seinen axialen Längsrändern mit im axialen Abstand voneinander angeordneten Zähnen 315 versehen. Ein im Basiskörper 309 drehbar gelagerter Kopf 317 verschließt das tragteilseitige Ende des Basiskörpers 309. Ein schematisch dargestellter Motor 319 treibt über eine Zapfwelle 321 den Rührer 313 an. Die Zapfwelle 321 kann federnd teleskopierbar ausgebildet sein und ist formschlüssig steckbar mit dem Kopf 317 gekuppelt. Die Federkraft der Zapfwelle 321 kann zur Erzeugung einer Dichtkraft zwischen Kopf 317 und Basiskörper 309 ausgenutzt werden.

Die Komponenten der zu mischenden Dentalmasse sind in beispielsweise aus leicht deformierbarem Metall bestehenden Tuben 323 bzw. 325 enthalten. Die Tuben 323, 325, die zugleich die Handelsverpackung der Komponenten der Dentalmasse bilden, werden mittels nachfolgend noch näher erläuterter Ausdrückschlitten 327 bzw. 329 gleichzeitig und entsprechend dem gewünschten Mischungsverhältnis der Komponenten ausgedrückt. Die Tuben 323, 325 sind mit ihren Auslaß-Gewindenippeln 331, 333 in entsprechende Gewindeöffnungen des Tragteils 303 geschraubt, die über Zuführkanäle 335 bzw. 337 mit der Mischkammer 311 verbunden sind. Der Basiskörper 309 trägt eine nach außen abstehende Nase 339, die in einen axialen Schlitz am Innenumfang eines Führungsrings 343 eingreift und darin in nicht näher dargestellter Weise axial verriegelbar ist. Der Führungsring 343 ist über Stege 345 am Tragteil 303 befestigt und sorgt dafür, daß radiale Öffnungen 347 bzw. 349 im Umfangsmantel des Basiskörpers 309 in der Betriebsstellung des Rührwerks 307 mit den Zuführkanälen 335 bzw. 337 fluchten. Über die Zuführkanäle 335, 337 werden die Komponenten der zu mischenden Dentalmasse im richtigen Mischungsverhältnis in die Mischkammer 311 hineingedrückt, wo sie von dem sich drehenden Rührer 313 innig vermischt werden. Die gemischte Dentalmasse tritt an der zapfwellenfernen, offenen Stirnseite 351 des Basiskörpers 309 aus.

Der Basiskörper 309 sitzt koaxial in einem hohlzylindrischen Rohransatz 353 eines um die Rührerachse drehbaren Steuerteils 355. Der Ansatz 353 weist Öffnungen 357 bzw. 359 auf, die in der Betriebsstellung des Steuerteils 355 mit den Zuführkanälen 335, 337 bzw. den Öffnungen 347, 349 des Basisteils 309 fluchten. Der Ansatz 353 bildet einen Ventilkörper, der mittels des Steuerteils 355 um seine Achse gedreht werden kann, bis sein Mantel die Zuführkanäle 335, 337 sperren.

An dem Tragteil 303 sind, wie bei 361 dargestellt, Steuerschalter angebracht, die von Nocken 363 des Steuerteils betätigt werden. Die Anordnung der Nocken 363 und der Steuerschalter 361 ist so getroffen, daß bei gesperrten Zuführkanälen 335, 337 sowohl der Motor 319 als auch die Motoren der Ausdrückschlitten 327, 329 abgeschaltet sind. Durch Drehen des Steuerteils 355 aus dieser Ruhepositon heraus wird über einen ersten Steuerschalter zunächst der Motor 319 eingeschaltet und dann bei geöffneten Zuführkanälen 335, 337 die Motoren der Ausdrückschlitten 327, 329.

Die Ausdrückschlitten 327, 329 sind im wesentlichen gleich aufgebaut, so daß im folgenden lediglich der Ausdrückschlitten 327 beschrieben werden soll. Der Ausdrückschlitten 327 ist, wie auch Fig. 7 zeigt, an zwei Führungen 361, 363 in Längsrichtung der Tube 323 frei verschiebbar geführt. Er trägt einen Rahmen 365, an dem eine Zahnwalze mit axial verlaufenden Zähnen drehbar gelagert ist. Mit der Zahnwalze 367 ist drehfest eine Riemenscheibe 369 verbunden, die über einen Zahnriemen 371 von einem Getriebemotor 373 angetrieben wird. Mit Abstand quer zur Verschieberichtung des Ausdrückschlittens 327 ist an einem gabelförmigen Arm 375 eine zweite Zahnwalze 377 gleichachsig zur Zahnwalze 367 drehbar gelagert. Die Zahnwalze 377 kämmt mit der Zahnwalze 367. Der Arm 375 ist auf der der Zahnwalze 367 abgewandten Seite der Zahnwalze 377 schwenkbar an dem Rahmen 365 gelagert. Der Mantelabstand der Zahnwalzen 367, 377 ist so bemessen, daß der Tubenmantel der ausgequetschten Tube 323 hindurchpaßt, wobei der Tubenmantel entsprechend der Zähnung der Zahnwalzen 367, 377 wellenförmig geprägt wird, wie dies für das ausgedrückte Tubenende 379 dargestellt ist.

Im Mischbetrieb ist der Motor 373 eingeschaltet und treibt die Zahnwalze 367 mit vorgegebener Drehzahl an. Die Zahnwalze 367 zieht den Ausdrückschlitten 327 beim Ausdrücken der Tube 323 zum Tragteil 303 hin. Eine Anschlagfläche 381 des Rahmens 365 auf der dem Tragteil 303 in Verschieberichtung des Schlittens abgewandten Seite verhindert, daß ein Achsansatz 383 der Zahnwalze 377 und damit die Zahnwalze selbst gegen die Ausdrückrichtung ausweicht. Mittels eines fest mit dem Arm 375 verbundenen Knebels 385 kann der Arm 375 geschwenkt und die Zahnwalze 377 außer Eingriff mit der Zahnwalze 367 gebracht werden. Bei ausgeschwenkter Zahnwalze 377 ist der Schlitten 327 von der Tube 323 abgekuppelt und kann vom Tragteil 303 weg in seine Ausgangsposition geschoben werden, in der die Tube 323 ausgewechselt werden kann.

Um das Mischungsverhältnis der Dentalmasse einstellen zu können, wird der Motor eines der Schlitten, vorzugsweise der zum Ausdrücken der Grundkomponententube benutzte Schlitten mit fester Drehzahl angetrieben, während die Motordrehzahl des zum Ausdrücken der Härtertube benutzten Schlittens einstellbar ist.

Bei festem Mischungsverhältnis können die Tuben parallel nebeneinander angeordnet sein, so daß ihre freien Enden gemeinsam zwischen ein Walzenpaar ähnlich dem Walzenpaar der Fig. 7 greifen. Ein und derselbe Schlitten drückt hierbei die Tuben sämtlicher Komponenten der Dentalmasse aus. Gegebenenfalls können zwei Komponentensätze mit unabhängig voneinander einschaltbaren Schlitten vorgesehen sein, so daß ohne Verzögerung auf den zweiten Satz umgeschaltet werden kann, wenn die Tuben des ersten Satzes geleert sind. Für die Tuben jedes der beiden Sätze können alternativ auch jeweils gesonderte Ausdrückschlitten vorgesehen sein.

- 1 -

Patentansprüche

1. Vorrichtung zum Mischen der Komponenten einer Dentalmasse, insbesondere einer Dental-Abdruckmasse,
g e k e n n z e i c h n e t durch ein betriebsmäßig
auswechselbares Rührwerk (5; 77; 205; 307) mit einem
Basiskörper (7; 75; 207; 309), welcher eine Mischkammer (9; 79; 209; 311), mehrere voneinander gesondert
in die Mischkammer mündende Zuführkanäle (45, 47; 101,
103; 251, 253; 335, 337) für die Komponenten sowie einen Auslaßkanal (11; 107; 265; 351) für die gemischte
Dentalmasse aufweist und mit einem in der Mischkammer
beweglich angeordneten Rührer (13; 57; 81; 211; 313)
und durch eine Antriebsvorrichtung (1, 21, 23; 73, 89;
203, 217, 219; 303, 317, 319) für den Rührer, an der
das Rührwerk abnehmbar gehalten ist.

2. Vorrichtung nach Anspruch 1,
dadurch g e k e n n z e i c h n e t ,
daß der Rührer als Rotationsrührer (13; 57; 81; 211;
313) ausgebildet ist, der bei an der Antriebsvorrichtung (1, 21, 23; 73, 89; 203, 217, 219; 303, 317, 319)
angebrachtem Rührwerk (5; 77; 205; 307) über eine formschlüssige, axial steckbare Kupplung (17, 19; 93, 95)
mit einer rotierend angetriebenen Zapfwelle (21; 91;

219; 319) der Antriebsvorrichtung drehfest gekuppelt ist.

3. Vorrichtung nach Anspruch 2,
   dadurch   g e k e n n z e i c h n e t ,
   daß der Rotationsrührer als Rührwendel (13) oder Rührschnecke oder Rührstab (83) mit von der Zapfwelle (91)
   axial wegweisenden, schräg zur Drehachse verlaufenden
   Schubflächen (99) oder als Flügelstern (57) ausgebildet ist.

4. Vorrichtung nach Anspruch 2 oder 3,
   dadurch   g e k e n n z e i c h n e t ,
   daß der Rotationsrührer als Rührstab (83; 313) oder als
   Flügelstern (57) mit in axialer Richtung mit Abstand
   aufeinanderfolgenden Zähnen (59; 97; 315) ausgebildet
   ist.

5. Vorrichtung nach Anspruch 1,
   dadurch   g e k e n n z e i c h n e t ,
   daß die mischkammerfernen Mündungen der im Basiskörper
   (7; 75) verlaufenden Zuführkanäle (45, 47; 101; 103)
   Kupplungsorgane bilden, die bei an die Antriebsvorrichtung (1, 21, 23; 73, 89) angebrachtem Rührwerk (5;
   77) die Zuführkanäle (45, 47; 101, 103) über komplementäre Kupplungsorgane (41, 43; 113, 115) der Antriebsvorrichtung (1, 21, 23; 73, 89) mit Vorratsbehältern
   (29, 31; 145, 147) für die Komponenten verbinden.

6. Vorrichtung nach Anspruch 5,
   dadurch   g e k e n n z e i c h n e t ,
   daß die Kupplungsorgane (41, 43) auf in Achsrichtung
   einer den Rührer (13; 57; 313) antreibenden Zapfwelle
   (21) einander gegenüberliegenden Seiten der Antriebsvorrichtung (1, 21, 23; 319, 321) und des Basiskörpers (7; 309) angeordnet sind.

7. Vorrichtung nach Anspruch 5,
   dadurch   g e k e n n z e i c h n e t ,
   daß die Zuführkanäle (101, 103) des Basiskörpers (75)
   im wesentlichen radial zur Drehachse des Rotationsrührers (81) verlaufen und daß die Kupplungsorgane der
   Zuführkanäle (101, 103) des Basiskörpers (75) und/oder
   der Antriebsvorrichtung (73, 89) radial zur Drehachse
   verschiebbar geführt sind und von einer Spanneinrichtung (121, 123) radial gegen das zugeordnete, komplementäre Kupplungsorgan andrückbar sind.

8. Vorrichtung nach Anspruch 7,
   dadurch   g e k e n n z e i c h n e t ,
   daß der Basiskörper (75) um die Rührerdrehachse drehbar an der Antriebsvorrichtung (73, 89) gehalten ist,
   daß die Zuführkanäle (101, 103) des Basiskörpers (75)
   in radial abstehenden Nocken (129, 131) münden, und
   daß die Kupplungsorgane der antriebsvorrichtungsseitigen Zuführkanäle (109, 111) in radial zur Rührerdrehachse verschiebbaren, von Federn (121, 123) zu den
   den Nocken (129, 131) vorgespannte und von den Nocken
   (129, 131) nach radial außen auslenkbare Mundstücke (113
   115) ausgebildet sind.

9. Vorrichtung nach Anspruch 1,
   dadurch   g e k e n n z e i c h n e t ,
   daß der Basiskörper (75; 207) mittels einer Bajonett-
   Verriegelung (139, 141, 143; 73, 79) axial an der Antriebsvorrichtung (73, 89) verriegelbar ist.

10. Vorrichtung nach Anspruch 9,
    dadurch   g e k e n n z e i c h n e t ,
    daß der Basiskörper (75; 207) an seinem zapfwellenfer-

— 4 —

nen Ende ein Griffstück (105; 263) trägt und daß der Auslaßkanal (107; 265) in dem Griffstück mit axialem Abstand von der Mischkammer (79; 209) quer zur Rührerdrehachse verlaufend ausmündet.

11. Vorrichtung nach einem der vorhergehenden Ansprüche, dadurch gekennzeichnet, daß das Rührwerk (5; 77; 205; 307) als Wegwerfteil ausgebildet ist.

12. Vorrichtung nach Anspruch 1, dadurch gekennzeichnet, daß der Basiskörper (309) die Form eines zylindrischen, an einer Stirnseite offenen Rohrs hat.

13. Vorrichtung nach einem der vorhergehenden Ansprüche, gekennzeichnet durch ein Tragteil (203; 303) mit einer Aufnahmeöffnung (201; 305) in die der Basiskörper (207; 309) des Rührwerks (205; 307) einsteckbar ist und mit Zuführkanälen (251, 253; 335, 337) für die Komponenten der Dentalmasse, die bei in seiner Betriebsstellung sich befindendem Basiskörper den Zuführkanälen des Basiskörpers benachbart münden und durch einen beweglich an dem Tragteil geführten Verschlußkörper (267; 353) zum Verschließen der basiskörperseitigen Mündungen der Zuführkanäle des Tragteils.

14. Vorrichtung nach Anspruch 13, dadurch gekennzeichnet, daß der Verschlußkörper als in der Aufnahmeöffnung (201; 305) um ihre Längsachse drehbare Hülse (267) oder hülsenförmiger Ansatz (353) ausgebildet ist, in die der Basiskörper (207; 309) einsteckbar ist und daß die Zuführkanäle (51, 53, 55, 59; 395, 337) des Basisteils und des Tragteils (203; 303) in der Betriebsstellung

des Basiskörpers über Durchtrittsöffnungen (275, 277; 357, 359) im Umfangsmantel der Hülse (267) bzw. Ansatzes (353) miteinander verbunden sind.

15. Vorrichtung nach Anspruch 14,
dadurch  g e k e n n z e i c h n e t ,
daß die Hülse (267) und der Basiskörper (207) durch eine in Einsteckrichtung des Basiskörpers formschlüssig zum Eingriff bringbare Kupplungsverbindung (269, 271) drehfest miteinander kuppelbar sind.

16. Vorrichtung nach Anspruch 14 oder 15,
dadurch  g e k e n n z e i c h n e t ,
daß der Basisteil (207; 309) mittels einer durch Drehen um die Längsachse der Hülse (267) bzw. des Ansatzes (353) verriegelbaren Bajonett-Verriegelung (73, 79) am Tragteil (203; 303) verriegelbar ist.

17. Vorrichtung nach einem der vorhergehenden Ansprüche,
dadurch  g e k e n n z e i c h n e t ,
daß die Antriebsvorrichtung (23, 217, 219) eine axial federnde Zapfwelle (219) für den formschlüssigen Eingriff in den Rührer (211) aufweist.

18. Vorrichtung nach Anspruch 1,
dadurch  g e k e n n z e i c h n e t ,
daß jeder Zuführkanal (45, 47; 101, 103; 251, 253; 335, 337) mit einem eine Komponente der Dentalmasse enthaltenden Druckraum (25, 27) eines Vorratszylinders (29, 31; 145, 147; 221, 223) verbunden ist, in welchem ein Kolben (33, 35; 149, 151; 225, 227) abgedichtet verschiebbar angeordnet ist oder mit einer die Komponente der Dentalmasse enthaltenden Tube (323; 325) verbunden ist.

19. Vorrichtung nach Anspruch 18,
dadurch g e k e n n z e i c h n e t ,
daß jeder Kolben (33, 35) von einem gesonderten Stellantrieb (49, 51) angetrieben ist und daß eine die
Stellantriebe (49, 51) steuernde Steuerung (53) vorgesehen ist, die die Verschiebegeschwindigkeit der Kolben (33, 35) einstellbar bestimmt.

20. Vorrichtung nach Anspruch 18,
dadurch g e k e n n z e i c h n e t ,
daß das Verhältnis der von den Kolben (149, 151; 225,
227) abgedeckten Querschnittsflächen der Vorratszylinder (145, 147; 221, 223) oder die Querschnittsfläche
der Tuben (323, 325) gleich dem Mischungsverhältnis
der Komponenten der Dentalmasse bemessen ist und daß
ein Stellantrieb (155; 229) sämtliche Kolben (149, 151)
gemeinsam und mit gleicher, vorzugsweise einstellbarer
Verschiebegeschwindigkeit antreibt bzw. die Tuben mit
gleicher Vorschubgeschwindigkeit ausdrückt.

21. Vorrichtung nach einem der Ansprüche 18 bis 20,
dadurch g e k e n n z e i c h n e t ,
daß die Vorratszylinder (29, 31; 145, 147; 221; 223)
einschließlich der darin verschiebbaren Kolben (33,
35; 149, 151; 225, 227) als von der Antriebsrichtung
(1, 21, 23; 73, 89; 203, 219, 221) abnehmbare Wegwerfteile ausgebildet sind.

22. Vorrichtung nach einem der vorhergehenden Ansprüche,
g e k e n n z e i c h n e t durch je einen Vorratszylinder (221, 223) für jede der zu mischenden Komponenten der Dentalmasse, in welchem ein Kolben (225,
227) abgedichtet verschiebbar ist, durch Aufnahmeöffnungen (235, 237) in dem Tragteil (203), in die die
kolbenstangenfernen Enden der Vorratszylinder (221, 223) oder an den Enden vorgesehene Ansätze (231, 233) abgedichtet einsteckbar sind und in deren quer zur Einsteckrichtung verlaufenden Mantelflächen die Zuführkanäle (251, 253) des Tragteils (203) münden und durch eine mit der Mündung des Zuführkanals (251, 253) fluchtend ausrichtbare, quer zur Einsteckrichtung gerichtete Austrittsöffnung (257, 261) in jedem Vorratszylinder (221, 223) oder dessen Ansatz (231, 233).

23. Vorrichtung nach Anspruch 22 oder 7,
dadurch  g e k e n n z e i c h n e t ,
daß die Einsteckrichtungen der Vorratszylinder (221, 223) in Betriebslage etwa horizontal verlaufen, daß die Aufnahmeöffnung (235) wenigstens eines der Vorratszylinder (221) so angeordnet ist, daß die vorratszylinderseitige Mündung des Zuführkanals (251) höher liegt als die basisteilseitige Mündung.

24. Vorrichtung nach Anspruch 13,
dadurch  g e k e n n z e i c h n e t ,
daß die Längsrichtung der Aufnahmeöffnung (201, 305) für den Basiskörper (207; 309) in Betriebslage etwa horizontal verläuft und daß die Zuführkanäle (255, 259; 335, 337) des Basiskörpers in Längsrichtung der Aufnahmeöffnung gegeneinander versetzt sind.

25. Vorrichtung nach Anspruch 13,
dadurch  g e k e n n z e i c h n e t ,
daß Vorratsbehälter für wenigstens eine Gruppe von zwei zu mischenden Komponenten vorgesehen sind, und daß der Verschlußkörper so ausgebildet ist, daß er die Mischkammer wählbar mit den Vorratszylindern lediglich einer der Gruppen verbindet und zu den Vorratszylindern der übrigen Gruppen sperrt.

26. Vorrichtung nach Anspruch 13,
dadurch gekennzeichnet,
daß für wenigstens eine der Komponenten der Dentalmasse mehrere Vorratsbehälter vorgesehen sind und daß
der Verschlußkörper so ausgebildet ist, daß er die
Mischkammer mit einer wählbaren Anzahl der Vorratsbehälter dieser Komponente oder mit wechselnden Vorratsbehältern dieser Komponente zu verbinden vermag.

27. Vorrichtung nach einem der vorhergehenden Ansprüche,
dadurch gekennzeichnet,
daß als Vorratsbehälter für die Komponenten der Dentalmasse flexible, langgestreckte und an einem Ende an den
Zuführkanal (335, 337) anschließbare Tuben (323, 325)
vorgesehen sind, die frei abstehend mit ihrem Anschlußende an der Vorrichtung befestigbar sind, daß
längs jeder Tube (323, 325) oder längs einer Gruppe von
parallelen, nebeneinander angeordneten Tuben ein Schlitten (327, 329) frei verschiebbar geführt ist, an dem
zwei zueinander achsparallele Walzen (367, 377) drehbar gelagert sind, welche die Tube (323, 325) bzw.
Tuben zwischen sich aufnehmen und bei Bewegung des
Schlittens (327, 329) zu deren Anschlußende hin, ausdrücken und daß eine der Walzen (367, 377) jedes Schlittens (327, 329) von einem Motor (373) rotierend antreibbar ist und formschlüssig oder kraftschlüssig an der
bzw. den zwischen die Walzen (367, 377) eingreifenden
Tube (323, 325) bzw. Tuben angreift.

28. Vorrichtung nach Anspruch 27,
dadurch gekennzeichnet,
daß die Walzen (367, 377) als miteinander kämmende
Zahnwalzen ausgebildet sind.

29. Vorrichtung nach Anspruch 27 oder 28, dadurch gekennzeichnet,
daß eine der Walzen (377) zwischen einer die Tube (323, 325) bzw. Tuben in Anlagekontakt zur anderen Walze (367) haltenden Position und einer die Tube (323, 325) bzw. Tuben für eine freie Verschiebung des Schlittens (327, 329) freigebenden Position verschiebbar geführt ist.

30. Vorrichtung nach Anspruch 29,
dadurch gekennzeichnet,
daß die verschiebbare Walze (377) an einem Arm (375) drehbar gelagert ist, der seinerseits um eine zur Walzendrehachse parallelen Achse schwenkbar an dem Schlitten (327, 329) gelagert ist.

31. Vorrichtung nach Anspruch 30,
dadurch gekennzeichnet,
daß die Drehachse der an dem Arm (375) gelagerten Walze (377) zwischen der Drehachse der anderen Walze (367) und der Schwenkachse des Arms (375) angeordnet ist.

32. Vorrichtung nach Anspruch 30 oder 31,
dadurch gekennzeichnet,
daß der Schlitten (327, 329) einen die Anlagekontaktposition des Arms (375) bestimmenden Anschlag (381) trägt, der die vom Anschlußende der Tube (323, 325) bzw. Tuben in Verschieberichtung des Schlittens (327, 329) wegführende Bewegung der am Arm (375) gelagerten Walze begrenzt.

33. Vorrichtung nach Anspruch 30,
dadurch gekennzeichnet,
daß der Arm (375) einen Handhabungsgriff (385) trägt.

34. Vorrichtung nach Anspruch 27, dadurch gekennzeichnet,
daß für jede Tube ein gesonderter Schlitten vorgesehen
ist und daß die Drehzahl zumindest eines Teils der Motoren einstellbar ist.

35. Vorrichtung nach Anspruch 27,
dadurch gekennzeichnet,
daß für die Tuben sämtlicher Komponenten der Dentalmasse ein gemeinsamer Schlitten vorgesehen ist.

**0087029** Feb. 1983

FIG. 1

FIG. 2

# FIG. 3

# FIG.4

FIG.5

FIG. 6

5/6

0087029

# FIG.7

Europäisches Patentamt

EUROPÄISCHER RECHERCHENBERICHT

**0087029**
Nummer der Anmeldung

EP 83 10 1068

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-3 767 085 (CANNON et al.)<br>* Ganzes Dokument * | 1 | A 61 C 9/00<br>A 61 C 5/06 |
| A | | 2-6,11<br>-13,18<br>,20-22<br>,25 | |
| A | US-A-3 390 814 (CREIGHTON, JR.<br>et al.)<br>* Figur 2 * | 1,3,18<br>,22 | |
| A | DE-C- 86 806 (DAMERIS)<br>* Seite 1, rechte Spalte, Zeilen<br>22-29 * | 3 | |
| A | DE-A-2 634 039 (LEIBE)<br>* Seite 7, Zeile 11 - Seite 8,<br>Zeile 25 * | 27,29 | RECHERCHIERTE SACHGEBIETE (Int. Cl. 3) |
| A | US-A-3 782 600 (COLUMBUS)<br>* Spalte 2, Zeilen 17-46; Figuren<br>1, 2 * | 27 | A 61 C 5/00<br>A 61 C 9/00<br>B 01 F 3/00<br>B 01 F 7/00<br>B 65 D 35/00 |
| A | US-A-3 581 943 (KOENIGSHOF et<br>al.)<br>* Spalte 3, Zeilen 1-14 * | 27 | |
| | --- -/- | | |

Der vorliegende Recherchenbericht wurde für alle Patentansprüche erstellt.

| Recherchenort<br>BERLIN | Abschlußdatum der Recherche<br>25-05-1983 | Prüfer<br>SIMON J J P |
|---|---|---|

Europäisches
Patentamt

**EUROPÄISCHER RECHERCHENBERICHT**

**0087029**
Nummer der Anmeldung

EP 83 10 1068

| | **EINSCHLÄGIGE DOKUMENTE** | | Seite 2 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) | |
| A | DE-A-2 138 661 (HOPF)<br>* Seite 7, Zeilen 10-12; Figuren 1, 2 * | 28 | | |
| | --- | | | |
| A | DE-A-2 550 955 (FISCHER) | | | |
| | --- | | | |
| A | DE-A-2 058 030 (SCHRIEVER) | | | |
| | ----- | | | |
| | | | RECHERCHIERTE SACHGEBIETE (Int. Cl. ³) | |

Der vorliegende Recherchenbericht wurde für alle Patentansprüche erstellt.

| Recherchenort<br>BERLIN | Abschlußdatum der Recherche<br>25-05-1983 | Prüfer<br>SIMON J J P |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82